# EUROPÄISCHE PATENTSCHRIFT

(11) **EP 3 138 970 B1**
(45) Veröffentlichungstag und Bekanntmachung des Hinweises auf die Patenterteilung: **13.05.2020**
(21) Anmeldenummer: 15183292.0
(22) Anmeldetag: 01.09.2015
(51) Int. Cl.: E03D 5/10, E03D 1/14, E03D 1/34, F16K 31/08

(54) **SPÜLVORRICHTUNG**
FLUSHING DEVICE
DISPOSITIF DE RINÇAGE

(43) Veröffentlichungstag der Anmeldung: 08.03.2017
(73) Patentinhaber: Geberit International AG, 8645 Jona (CH)
(72) Erfinder: DIEPLINGER, Yves, 6300 Zug (CH); OENGÖREN, Abdullah, 8370 Sirnach (CH)
(74) Vertreter: Frischknecht, Harry Ralph

(56) Entgegenhaltungen:
- EP-A1- 1 854 926
- WO-A1-2008/039063
- DE-A1-102005 037 122
- FR-A1- 2 872 184
- FR-A3- 2 991 426

## Beschreibung

### TECHNISCHES GEBIET

Die vorliegende Erfindung betrifft eine Sptüvorrichtung nach dem Oberbegriff von Anspruch 1 sowie ein Spülverfahren nach Anspruch 13.

### STAND DER TECHNIK

Spülventile für Spülkästen für Urinale oder Klosetts sind aus dem Stand der Technik bekannt. Aus der EP 1 460 188 ist ein Spülventil bekannt geworden, dessen Verschlusskörper mit einem Servomotor angetrieben wird. Nachteilig an der EP 1 460 188 ist die mechanische Anbindung zwischen dem Servomotor und Verschlusskörper, welche zu Ausfällen führen kann.

Aus der EP 1 156 166 ist eine Spülvorrichtung bekannt geworden, bei welcher ein Verschlusselement mit einem Elektromagneten angehoben wird. Obwohl bezüglich der Geschwindigkeit der Betätigung des Verschlusselementes sehr gute Resultate erzielt wurden, führt der Einsatz eines Elektromagnetes zu lauten Geräuschen bei der Betätigung. Aus der DE 10 2005 037 122 ist eine Ventilanordnung bekannt geworden, gemäss welcher der Ablauf aus einem Flüssigkeitsbehälter mit einem Betätigungsorgan umfassend eine Spule und ein Permanentmagnet. Dieses Dokument entspricht dem Oberbegriff des Anspruchs 1 und wird als nächstliegender Stand der Technik angesehen.

### DARSTELLUNG DER ERFINDUNG

Ausgehend von diesem Stand der Technik liegt der Erfindung eine Aufgabe zugrunde, eine Spülvorrichtung für einen Spülkasten anzugeben, welche die Nachteile des Standes der Technik überwindet. Insbesondere soll die Wasserentnahme aus dem Spülkasten mit der Spülvorrichtung besser steuerbar sein.

Diese Aufgabe löst der Gegenstand von Anspruch 1. Demgemäss umfasst eine Spülvorrichtung für einen Spülkasten einen sich um eine Mittelachse herum erstreckenden Ventilsitz, der in Strömungsrichtung gesehen vor einer Auslauföffnung angeordnet ist, einen Verschlusskörper mit einer Dichtung, die mit dem Ventilsitz zusammenarbeitet, wobei der Verschlusskörper mit der Dichtung von einer Verschlusslage in eine Spüllage anhebbar ist, und ein elektrisch steuerbares Antriebselement, welches den Verschlusskörper von der Verschlusslage in die Spüllage bewegt. In der Verschlusslage liegt die Dichtung bezüglich des Spülwassers dicht auf dem Ventilsitz, so dass kein Spülwasser zwischen Dichtung und Ventilsitz abfliessen kann. In der Spüllage liegt die Dichtung beabstandet zum Ventilsitz, so dass das Spülwasser durch diesen Zwischenraum hindurch fliessen kann. Das elektrisch steuerbare Antriebselement ist ein Tauchspulenaktuator mit einer elektrischen Spule und einem ferromagnetischen Gegenstück, wobei mit dem Tauchspulenaktuator eine mechanische Kraft auf den Verschlusskörper aufbringbar ist, so dass dieser von der Verschlusslage in die Spüllage bewegbar ist.

Durch den Einsatz des Tauchspulenaktuator kann die Bewegung von der Verschlusslage in die Spüllage sehr genau gesteuert werden. Insbesondere kann die Grösse des Hubs des Verschlusskörpers ausgehend von der Verschlusslage einfach gesteuert werden, so dass die Distanz zwischen Dichtung und Ventilsitz und somit die Spüllage einfach einstellbar ist.

In der Spüllage wird der Verschlusskörper durch den Tauchspulenaktuator in seiner relativen Lage zum Ventilsitz gehalten, vorzugsweise derart, dass der Abstand zwischen Ventilsitz und Dichtung konstant ist. Der Abstand kann über einen Spülvorgang auch variieren. Durch den Tauchspulenaktuator kann also der Hub des Verschlusskörpers individuell gesteuert werden.

Beim Tauchspulenaktuator handelt es sich insbesondere um einen linearen Tauchspulenaktuator, bei welchem der Verschlusskörper entlang der Richtung der Mittelachse bewegbar ist.

Die Spule ist am Verschlusskörper angeordnet und das ferromagnetische Gegenstück ist in seiner Lage bezüglich des Ventilsitzes fest und beabstandet zum Ventilsitz angeordnet ist. Durch die Anordnung der Spule am Verschlusskörper ergeht der Vorteil, dass dieser bezüglich seines Gesamtgewichtes verhältnismässig leicht ausgebildet werden kann, was bei der Bewegung von der Spüllage in die Verschlusslage zu einer Reduktion der Geräusche führt.

Vorzugsweise umfasst der Verschlusskörper einen zylindrisch sich um die Mittelachse herum erstreckender Aufnahmeabschnitt, der beabstandet von der Dichtung liegt, wobei die Spule sich um diesen Aufnahmeabschnitt herum erstreckt und am Aufnahmeabschnitt gelagert ist.

Vorzugsweise liegt die Spule auf der Oberfläche des Aufnahmeabschnittes auf. Der Draht der Spule ist dabei mit einer elektrisch isolierenden Beschichtung versehen, so dass die Spule in Kontakt mit dem Spülwasser kommen kann. Alternativ kann die Spule auch vollständig im Verschlusskörper integriert sein, wobei die Spule dann in den Verschlusskörper eingelassen ist.

Die Spule weist jeweils endseitig einen elektrischen Anschluss an, über welche die Spule bei Bedarf, also bei einem Spülvorgang mit elektrischer Energie versorgt werden kann, so dass ein mit dem ferromagnetischen Gegenstück zusammenarbeitendes Magnetfeld induziert wird.

Vorzugsweise weist der Verschlusskörper eine Lagerfläche auf. Weiter ist eine Führungsfläche in ihrer Lage fest und beabstandet zum Ventilsitz angeordnet ist, wobei der Verschlusskörper über seine Lagerfläche an der Führungsfläche bewegbar gelagert ist.

Führungsfläche und Lagerfläche sind vorzugsweise zylindrisch, insbesondere mit kreiszylindrischem Querschnitt, um die Mittelachse M umlaufend ausgebildet. Lagerfläche und Führungsfläche können weiter je eine oder mindestens eine Nut bzw. je ein oder mindestens ein Kamm umfassen, wobei Nut und Kamm in Richtung der Mittelachse orientiert sind und der Kamm in die Nut einragt, so dass ein Verdrehen des Verschlusskörpers zur feststehenden Führungsfläche verunmöglicht wird.

Vorzugsweise schliesst sich dem Ventilsitz eine Haltestruktur an, an welcher das ferromagnetische Gegenstück fest gelagert ist.

Ventilsitz und Haltestruktur können einstückig miteinander in Verbindung stehen. Alternativerweise kann die Haltestruktur auch mehrere Teile umfassen, die miteinander in Verbindung stehen.

Die besagte Haltestruktur und/oder das ferromagnetische Gegenstück können die Führungsfläche, an welcher der Verschlusskörper mit seiner Lagerfläche bewegbar gelagert ist, bereitstellen. Die Führungsflache und auch die Lagerfläche können aus mehreren Flächenteilen bestehen.

In einer besonders bevorzugten Ausführung schliessen sich dem Ventilsitz mehrere um die Mittelachse verteilt angeordnete Stege an. Diese Stege münden dann in einen Haltering, welcher beabstandet zum Ventilsitz liegt. Zwischen Haltering und Stegen liegen Durchflussöffnungen. Der Haltering dient der Aufnahme von einem Gehäuse. Im Gehäuse ist das ferromagnetische Gegenstück angeordnet, welches dann in Alleinstellung oder in Kombination mit dem Gehäuse zugleich die Führungsfläche bereitstellen kann. Die besagte Haltestruktur wird also durch die Stege, den Haltering und das Gehäuse bereitgestellt. Das Gehäuse kann einstückig mit dem Haltering in Verbindung stehen oder kann zum Haltering trennbar ausgebildet sein.

Vorzugsweise ist das ferromagnetische Gegenstück als Hülsenteil ausgebildet, welches sich zylindrisch, insbesondere kreiszylindrisch, um die Mittelachse herum erstreckt. Hierdurch eignet sich das ferromagnetische Gegenstück auch als Träger der Führungsfläche.

In einer Weiterbildung ist ein weiteres ferromagnetisches Gegenstück vorhanden, welches als zylindrisch, insbesondere kreiszylindrisch, um die Mittelachse herum erstreckendes Hülsenteil ausgebildet ist. Die Querschnittsform, nicht aber die Querschnittsgrösse, des besagten Hülsenteils und des weiteren Hülsenteils ist vorzugsweise identisch. Das weitere Hülsenteil weist einen kleineren Durchmesser als das besagte Hülsenteil auf und ist konzentrisch zum besagten Hülsenteil angeordnet. Die beiden Hülsenteile definieren einen Spalt, insbesondere einen Ringspalt, in welchem die Spule bewegbar ist.

Vorzugsweise wird in der Weiterbildung die Führungsfläche durch das Hülsenteil und/oder das weitere Hülsenteil und/oder das besagte Gehäuse bereitgestellt.

Vorzugsweise ist ein Permanentmagnet, welcher mit der Spule und dem ferromagnetischen Gegenstück zusammenarbeitet, in seiner Lage ortsfest zum ferromagnetischen Gegenstück, insbesondere in Kontakt mit demselben bzw. denselben, angeordnet.

In der Variante, in welcher das ferromagnetische Gegenstück als Hülsenteil oder als Hülsenteil mit einem weiteren Hülsenteil ausgebildet ist, liegt der Permanentmagnet vorzugsweise an der Stirnseite, die am weitesten Weg vom Ventilsitz liegt, auf. Der Permanentmagnet kann dabei ringförmig ausgebildet sein.

Vorzugsweise ist eine Steuereinheit zur Ansteuerung der Spule am oder im Verschlusskörper angeordnet ist. Die Steuereinheit kann dabei die Form einer elektronischen Leiterplatte sein, welche mit einer Dichtschicht versehen ist, welche die elektronischen Komponenten bezüglich des Spülwassers trocken hält.

Die Steuereinheit steht mit der Spule wie oben beschrieben in elektrischem Kontakt. Weiter kann die Steuereinheit mit einem Energieversorgungselement in Verbindung stehen, so dass die Steuereinheit und auch die Spule mit elektrischer Energie versorgt werden kann. Das Energieversorgungselement kann eine Batterie, ein Kondensator oder ein Netzanschluss sein.

Vorzugsweise umfasst die Steuereinheit einen Sensor, insbesondere einen Hallsensor, mit welchem die Distanz zwischen Dichtung und Ventilsitz bestimmbar ist, wobei der Hallsensor mit dem Magnetfeld des Permanentmagneten zusammenarbeitet oder wobei der Hallsensor mit dem Magnetfeld eines zusätzlichen Permanentmagneten zusammenarbeitet. Durch den Einsatz des Hallsensors kann die Lage des Verschlusskörpers relativ zum Ventilsitz und somit der Grad der Öffnung der Spülvorrichtung bestimmt werden.

Vorzugsweise ist die Steuereinheit oberhalb der Dichtung am bzw. im Verschlusskörper gelagert ist.

Vorzugsweise umfasst die Spülvorrichtung weiter ein Überlaufrohr, welches mit seiner Mittelachse koaxial mit der besagten Mittelachse des Ventilsitzes verläuft. Alternativ kann das Überlaufrohr auch seitlich versetzt zum Ventilsitz sein.

Eine Sanitäranordnung umfasst einen Spülkasten, in welchem eine Spülvorrichtung nach obiger Beschreibung sowie eine Betätigungseinheit, mit welcher bei Betätigung ein Steuersignal für den Tauchspulenaktuator bereitstellbar ist. Das Steuersignal kann dabei über ein Kabel oder kabellos an die Steuereinheit übermittelt werden.

Ein Spülverfahren für eine Spülvorrichtung nach obiger Beschreibung ist dadurch gekennzeichnet, dass bei Auslösung einer Spülung der Tauchspulenaktuator aktiviert wird, so dass der Verschlusskörper von der Verschlusslage in die Spüllage bewegt wird, und dass nach Abfluss einer vorbestimmten Menge von Spülwasser der Tauchspulenaktuator deaktiviert wird, so dass der Verschlusskörper aufgrund seiner Schwerkraft von der Spüllage in die Verschlusslage bewegt wird.

Ein alternatives Spülverfahren für eine Spülvorrichtung nach obiger Beschreibung ist dadurch gekennzeichnet, dass bei Auslösung einer Spülung der Tauchspulenaktuator aktiviert wird, so dass der Verschlusskörper von der Verschlusslage in die Spüllage bewegt wird, und dass nach Abfluss einer vorbestimmten Menge von Spülwasser der Tauchspulenaktuator derart aktiviert wird, so dass der Verschlusskörper aktiv durch den Tauchspulenaktuator von der Spüllage in die Verschlusslage bewegt wird.

Vorzugsweise wird mit der Steuereinheit die Veränderung mindestens eines der Spule zugeführten elektrischen Parameters gemessen, wobei in einem Schritt der Bestimmung des Ist-Füllstandes der Füllstand im Spülkasten anhand der Veränderung des elektrischen Parameters bestimmbar ist und wobei wenn der Ist-Füllstand den Wert eines Soll-Füllstandes erreicht, der Verschlusskörper in die Verschlusslage bewegt wird.

Der elektrische Parameter verändert sich über die Zeit des Spülvorgangs, weil die auf den Verschlusskörper wirkenden Kräfte sich aufgrund des aus dem Spülkasten abfliessenden Spülwassers ebenfalls verändern.

Mit anderen Worten gesagt: Die Füllstandsmessung bzw. die Füllstandsbestimmung erfolgt über die Messung der Veränderung des elektrischen Parameters im Zusammenhang mit der Spule des Tauchspulenaktuators.

Die Messung des elektrischen Parameters kann über die ganze Zeitdauer der Spülung oder nur gegen Ende der Spülung hin erfolgen.

Vorzugsweise wird in der Spüllage der Verschlusskörper in festem Abstand zum Ventilsitz gehalten, wobei die Veränderung des elektrischen Parameters bei sich in der Spüllage befindlichen Verschlusskörper gemessen wird. Mit anderen Worten: Der Abstand zwischen Verschlusskörper und Ventilsitz wird, wenn sich der Verschlusskörper in Spüllage befindet, konstant gehalten. Hierfür wird besonders bevorzugt die Lage des Verschlusskörpers durch den Hallsensor ermittelt und basierend auf dieser Messung wird die Spule mit elektrischer Leistung versorgt. Diese Leistung verändert sich, wobei diese Veränderung gemessen wird und dann als Eingangsgrösse für die Bestimmung des Füllstandes dient.

Es wird also vorzugsweise die der Spule während der Spülung zugeführte elektrische Leistung gemessen. Durch die Veränderung der Leistung über die Zeitdauer der Spülung kann auf den Füllstand im Spülkasten geschlossen werden. Aufgrund der sich bei der Spülung verändernden Kräfteverhältnisse auf den Verschlusskörper verändert sich auch die auf die Spule wirkende elektrische Leistung.

Die den Verschlusskörper kräftemässig am meisten beeinflussende Komponente ist der Wasserdruck. Zu Beginn der Spülung, also wenn der Spülkasten noch voll ist, lastet ein grösserer Wasserdruck auf dem Verschlusskörper, weshalb eine grössere elektrische Leistung notwendig ist, um den Verschlusskörper in der Spüllage zu halten, als bei halbleerem oder ganz leerem Spülkasten. Mit anderen Worten gesagt: Mit absinkendem Wasserstand im Spülkasten sinkt auch die benötigte elektrische Leistung um den Verschlusskörper auf konstanter Spüllage zu halten. Somit kann durch Messung der elektrischen Leistung ein Rückschluss auf den Wasserstand im Spülkasten gemacht werden. Soll der Füllstand erfasst werden, so ist es vorteilhaft, wenn der Verschlusskörper während der gesamten Spülung auf der gleichen Höhe bzw. der gleichen Spüllage gehalten wird, was, wie oben erwähnt, durch den Hallsensor erreicht wird.

Es wäre aber auch denkbar, dass man den Füllstand sinngemäss bei einer Änderung der Lages des Verschlusskörpers erfassen würde, wobei dann die Lage des Verschlusskörpers entsprechend als Eingangsgrösse für die Füllstandsbestimmung dienen würde.

Vorzugsweise kann anhand des Füllstandes der Zeitpunkt der Bewegung des Ventikörpers von der Spüllage in die Verschlusslage gesteuert werden. Bei einer Teilmengenspülung kann diese Bewegung beispielsweise bei Erreichen des vorbestimmten Füllstandes aufgrund der besagten Messung gesteuert werden.

Durch die Bestimmung des Füllstandes anhand über den besagten elektrischen Parameter entfällt der Einsatz eines separaten Sensors für die Füllstandsüberwachung. Die Messung erfolgt über den Hall-Sensor, mit welchem der Verschlusskörper in seiner konstanten Spüllage gehalten wird und die Leistungsaufnahme der Spule, welche nötig ist, um den Verschlusskörper in seiner konstanten Spüllage zu halten.

Die erfindungsgemässe Vorrichtung umfasst also keinen Sensor, der ausschliesslich für die Füllstandüberwachung vorgesehen ist.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht einer Spülvorrichtung gemäss einer Ausführungsform der vorliegenden Erfindung;
- Fig. 2: eine Schnittansicht durch die Spülvorrichtung nach Figur 1 in der Verschlusslage;
- Fig. 3: eine Schnittansicht durch die Spülvorrichtung nach Figur 1 in der Spüllage;
- Fig. 4: eine geschnittene Explosionsansicht der Spülvorrichtung nach Figur 1;
- Fig. 5: eine perspektivische Explosionsansicht der Spülvorrichtung nach Figur 1; und

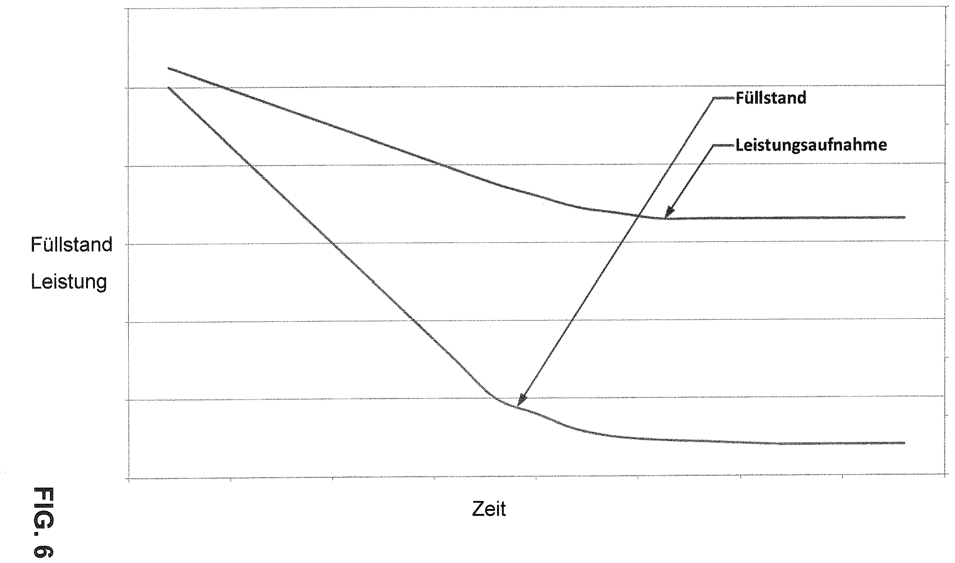

- Fig. 6: eine schematische Darstellung der Leistungsaufnahme in Relation zum Füllstand.

### BESCHREIBUNG BEVORZUGTER AUSFÜHRUNGSFORMEN

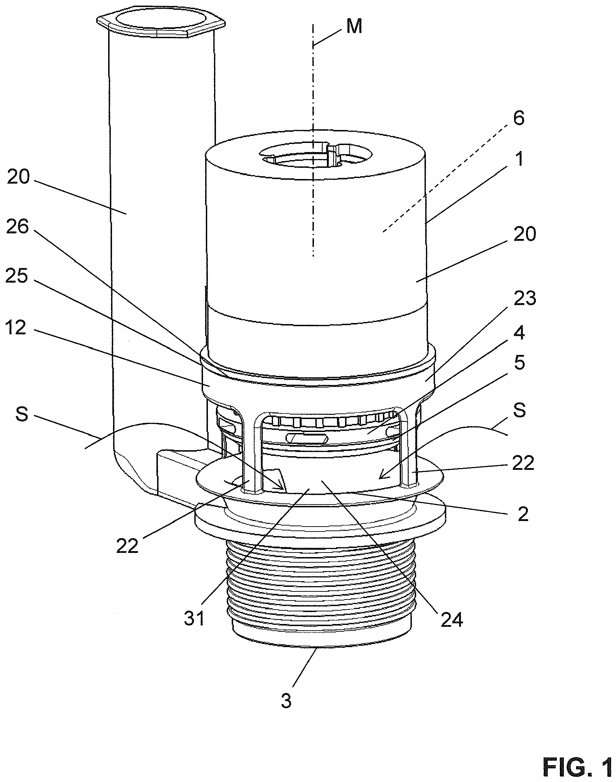

In der Figur 1 wird eine perspektivische Ansicht einer Spülvorrichtung 1 gezeigt. Die Spülvorrichtung 1 kann mit einem Spülkasten verbunden werden und dient dort als Spülventil. Bei der Spülvorrichtung 1 handelt es sich um eine mechatronische Spülvorrichtung, bei welcher die Hubbewegung eines Verschlusskörpers 4, wie unten erläutert durch einen mechatronischen Antrieb erfolgt.

Die Spülvorrichtung 1 umfasst einen sich um eine Mittelachse M herumerstreckenden Ventilsitz 2, der in Strömungsrichtung gesehen vor einer Auslassöffnung 3 angeordnet ist, einen Verschlusskörper 4 mit einer Dichtung 5, die mit dem Ventilsitz 2 zusammenarbeitet, wobei der Verschlusskörper 4 von einer Verschlusslage in eine Spüllage anhebbar ist und ein elektrisch steuerbares Antriebselement 6, welches den Verschlusskörper 4 von der Verschlusslage in die Spüllage bewegt. Die Strömungsrichtung ist in der Figur 1 mit dem Pfeil S dargestellt. In der Figur 1 ist der Verschlusskörper 4 mit der Dichtung 5 beabstandet zum Ventilsitz 2 gezeigt. Der Veschlusskörper 4 befindet sich dabei in seiner Spüllage und Wasser kann durch den Zwischenraum 31 zwischen Dichtung 5 und Ventilsitz 2 zur Auslassöffnung 3 gelangen und so einer Klossettschüssel oder einem Urinal zugeführt werden. In der Verschlusslage liegt die Dichtung 5 auf dem Ventilsitz 2 auf, wodurch verhindert wird, dass Spülwasser zur Auslassöffnung 3 fliessen kann.

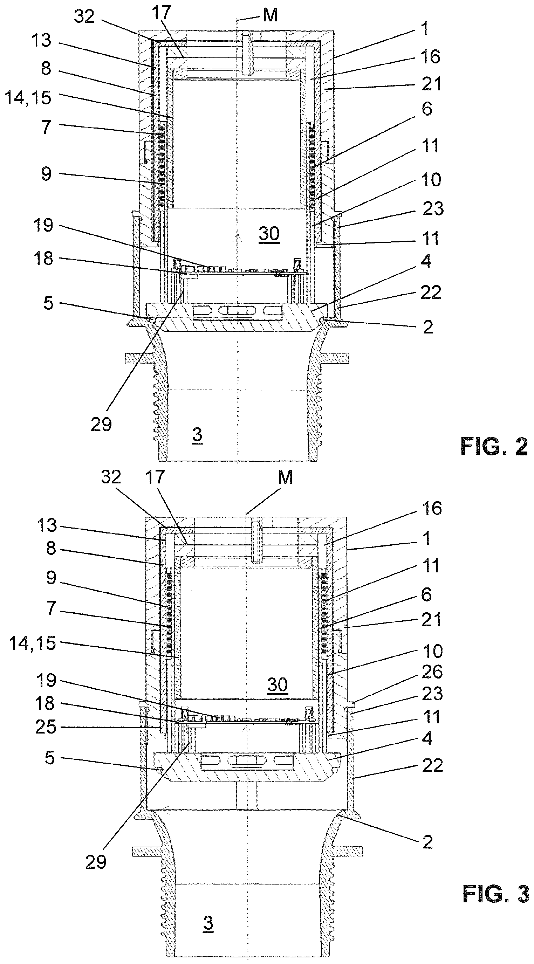

Das elektrisch steuerbare Antriebselement 6 ist ein Tauchspulenaktuator 6 mit einer elektrischen Spule 7 und einem ferromagnetischen Gegenstück 8. Mit dem Tauchspulenaktuator 6 ist eine mechanische Kraft auf den Verschlusskörper 4 aufbringbar, sodass dieser entgegen der Schwerkraft von der Verschlusslage in die Spüllage bewegbar ist. Der Aufbau des Tauchspulenaktuators und die Zuordnung von Spule 7 und Gegenstück 8 wird dann im Zusammenhang mit der Figur 2 genauer beschrieben.

Der Tauchspulenaktuator 6 ist elektrisch ansteuerbar und dient als Linearantrieb, so dass der Verschlusskörper 4 von der Verschlusslage in die Spüllage bewegbar ist. Der Tauchspulenaktuator ist dabei derart steuerbar, dass die Spüllage des Verschlusskörpers 4 bzw. der Abstand zwischen Ventilsitz 2 und Dichtung 5 im Rahmen der Bewegungsmöglichkeit des Verschlusskörpers frei wählbar bzw. einstellbar ist. Darüber hinaus kann die Lage so gewählt werden, dass der Verschlusskörper 4 in seiner Spüllage nicht auf einen Anschlag fährt, sondern durch den Tauchspulenaktuator 6 in Spüllage gehalten wird. Hierdurch gibt es keine Auffahrgeräusche des Verschlusskörpers 4.

Von der Figur 1 kann weiterhin erkannt werden, dass die Spülvorrichtung 1 zusätzlich ein Überlaufrohr 20 umfasst. Das Überlaufrohr 20 mündet hier in die Auslassöffnung 3 unterhalb des Ventilsitzes 2. Über das Überlaufrohr 20 kann bei defektem Füllventil Wasser aus dem Spülkasten abgeführt werden.

Die Figuren 2 und 3 zeigen Schnittdarstellungen der Spülvorrichtung 1. In der Figur 2 befindet sich der Verschlusskörper 4 in seiner Verschlusslage, in welcher die Dichtung 5 in Kontakt mit dem Ventilsitz 2 ist, und in der Figur 3 befindet sich der Verschlusskörper 4 in seiner Spüllage, in welcher die Dichtung 5 beabstandet zum Ventilsitz 2 liegt.

Die Spule 7 des Tauchspulenaktuators 6 ist in der gezeigten Ausführungsform am Verschlusskörper 4 angeordnet. Das ferromagnetische Gegenstück 8 ist in seiner Lage bezüglich des Ventilsitzes 2 fest und beabstandet zum Ventilsitz 2 angeordnet. Bei einer Spülung wird die Spule 7 mit elektrischer Energie versorgt, wodurch ein Magnetfeld entsteht, dessen Zusammenarbeit mit dem ferromagnetischen Gegenstück 8 dann zu einer auf den Verschlusskörper 4 wirkenden Kraft resultiert. Durch eine Anpassung der elektrischen Energie kann die Feldstärke des durch die Spule 7 generierten Magnetfeldes beeinflusst werden, wodurch auch die Bewegung des Verschlusskörpers 4 variiert werden kann.

In der gezeigten Ausführungsform befindet sich das Gegenstück 8 in einem Gehäuse 21. In diesem Gehäuse 21 ist das ferromagnetische Gegenstück 8 fest gelagert. Das Gehäuse 21 seinerseits ist an einem über Stege 22 gelagerten Haltering 23 gelagert. Die Stege 22 stehen dabei vom Ventilsitz 2 weg. In der gezeigten Ausführungsform sind vier Stege 22 angeordnet, welche in gleichmässigen Abständen zueinander um die Mittelachse M verteilt angeordnet sind. Zwischen zwei benachbarten Stegen 22 befindet sich eine Durchlassöffnung 24, durch welche Spülwasser zum Ventilsitz 2 gelangen kann. Das Gehäuse 21 ragt hier in den Haltering 23 ein und wird dort gelagert. Die Lagerstelle 25 zwischen dem Gehäuse 21 und dem Haltering 23 ist zylindrisch ausgebildet und umfasst eine Anschlagspaarung 26, welche eine Bewegung entgegen der Schwerkraft zwischen Gehäuse 21 und Haltering 23 verunmöglicht. In der gezeigten Ausführungsform bilden der Ventilsitz 2, die Stege 22 und der Haltering 23 eine einteilige Struktur, zu welcher das Gehäuse 21 mechanisch verbindbar ist. Andere Konfiguration sind auch denkbar, beispielsweise könnte das Gehäuse 21 ebenfalls Teil der einteiligen Struktur sein.

Die Stege 22, der Haltering 23 und das Gehäuse 21 stellen eine Haltestruktur 12 bereit, an welcher das ferromagnetische Gegenstück fest gelagert ist.

Das Gehäuse 21 selbst kann einteilig oder mehrteilig sein.

Für die Lagerung der Spule 7 weist der Verschlusskörper 4 einen zylindrisch um die Mittelachse M sich herumerstreckenden Aufnahmeabschnitt 9 auf. Auf diesem Aufnahmeabschnitt 9 ist die Spule 7 aufgewickelt und wird dort entsprechend gelagert. Der Aufnahmeabschnitt 9 liegt dabei beabstandet von der Dichtung 5. Zwischen dem Dichtabschnitt 5 und dem Aufnahmeabschnitt 9 umfasst der Verschlusskörper 4 eine Lagerfläche 10. Mit der Lagerfläche 10 ist der Verschlusskörper 4 im inneren des Gehäuses 21 gelagert und kann in Richtung der Mittelachse M zwischen Verschlusslage und Spüllage verschoben werden. Für den Kontakt mit der Lagerfläche 10 weist das Gehäuse 21 eine Führungsfläche 11 auf, an welcher der Verschlusskörper 4 bewegbar gelagert ist. Die Führungsfläche 11 ist in ihrer Lage fest und beabstandet zum Ventilsitz 2 angeordnet.

Lagerfläche 10 und Führungsfläche 11 sind im Wesentlichen zylindrisch um die Mittelachse M umlaufend ausgebildet. Insbesondere sind die beiden Flächen 10, 11 kreiszylindrisch ausgebildet.

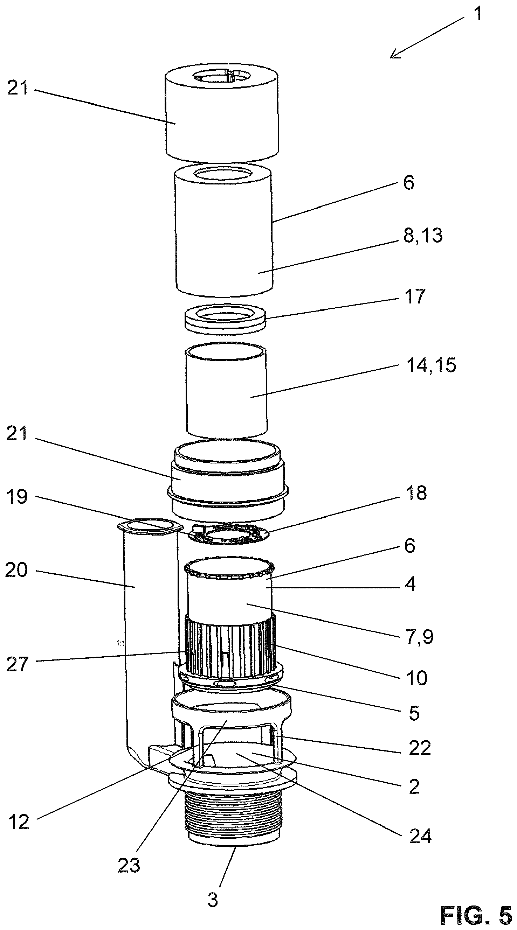

In der gezeigten Ausführungsform umfasst die Lagerfläche 10 eine Mehrzahl von Kämmen 27 und die Führungsfläche 11 umfasst eine Mehrzahl von Nuten 28. Dies wird insbesondere von der Figur 5 ersichtlich. Die Kämme 27 greifen dabei in die Nuten 28 ein. Sowohl Kamm 27 als auch Nute 28 sind in Richtung der Mittelachse M orientiert. Durch die Kämme 27 und die Nuten 28 wird eine Verdrehung des Verschlusskörpers 4 relativ zum Gehäuse 21 verhindert und eine Bewegung in Richtung der Mittelachse M ermöglicht. Vorteilhaft wird mindestens eine Nute und mindestens ein Kamm angeordnet. Es ist dabei auch denkbar, so wie in den Figuren gezeigt, eine Vielzahl von Nuten 28 und Kämmen 27 vorzusehen.

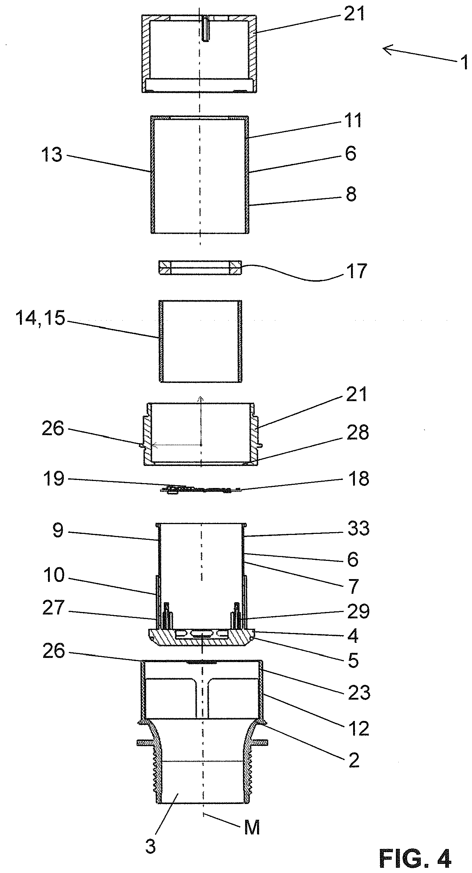

Unter Bezugnahme auf die Figuren 2 bis 5 wird nun die Ausbildung des ferromagnetischen Gegenstückes 8 genauer erläutert. In der gezeigten Ausführungsform ist das ferromagnetische Gegenstück 8 als Hülsenteil 13 ausgebildet, welches sich zylindrisch, insbesondere kreiszylindrisch, um die Mittelachse M herumerstreckt. Innerhalb des Hülsenteils 13 ist der Verschlusskörper 4 bewegbar. Vorzugsweise ist die Spule 7 in jeder Lage, also in der Verschlusslage, wie auch in der Spüllage im Inneren des Hülsenteils 13 angeordnet. Das Hülsenteil 13 weist im Bereich seiner oberen Stirnseite, die gegenüber des Ventilsitzes 2 liegt, ein Flanschelement 32 auf, welches sich radial vom Hülsenteil 13 nach innen in Richtung der Mittelachse M erstreckt. Das Hülsenteil 13 ist in der gezeigten Ausführungsform im Inneren des Gehäuses 21 gelagert.

Vorzugsweise gibt es radiales Spiel zwischen der Innenseite des Hülsenteils 13 und der Spule 7. Die Lagerfläche 10 kann in Kontakt mit der Innenseite kommen, wobei dann die Innenseite des Hülsenteils 13 ebenfalls einen Teil der besagten Führungsfläche 11 bereitstellt.

Zusätzlich zum Hülsenteil 13 ist in der gezeigten Ausführungsform ein weiteres ferromagnetisches Gegenstück 14 vorhanden, welches ebenfalls als ein sich zylindrisch, insbesondere kreiszylindrisch, um die Mittelachse M herum erstreckendes Hülsenteil 15 ausgebildet ist. Das weitere Hülsenteil 15 weist dabei einen kleineren Durchmesser als das Hülsenteil 13 auf und liegt konzentrisch zum Hülsenteil 13. Zwischen den beiden Hülsenteilen 13, 15 gibt es einen Spalt 16. Bei einer kreiszylindrischen Ausbildung der Hülsenteile 13, 15 ist der Spalt 16 ein Ringspalt. Im Spalt 16 ist die Spule 7 mit dem Aufnahmeabschnitt 9 bewegbar gelagert. Das weitere Hülsenteil 15 ist in seiner Länge kürzer als das Hülsenteil 13 ausgebildet.

Wie das Hülsenteil 13 kann auch das weitere Hülsenteil 15 einen Teil der besagten Führungsfläche bereitstellen. In der gezeigten Ausführungsform wird dies dadurch erreicht, dass der Verschlusskörper 4 innenseitig eine weitere Lagerfläche 33 umfasst, welche mit der Aussenseite des Hülsenteils 13 in Kontakt steht. Je nach Ausführung ist es aber auch denkbar, dass zwischen der Innenseite des Verschlusskörpers 4 und der Aussenseite des weiteren Hülsenteils 13 radiales Spiel gibt.

Weiter umfasst die Spülvorrichtung 1 einen Permanentmagneten 17. Der Permanentmagnet 17 ist in seiner Lage ortsfest zum ferromagnetischen Gegenstück 8, 14 angeordnet und arbeitet mit diesem zusammen. In der gezeigten Ausführungsform ist der Permanentmagnet 17 im Kontakt mit dem ferromagnetischen Gegenstück 8, 14. Bezüglich des Gehäuses 21 ist sowohl das ferromagnetische Gegenstück 8, 14 als auch der Permanentmagnet 17 im Inneren des Gehäuses 21 angeordnet und über das Gehäuse 21 am Haltering 23 gelagert.

Weiter umfasst die Spülvorrichtung 1 eine Steuereinheit 18 zur Ansteuerung der Spule. Die Steuereinheit 18 ist hier im Inneren des Verschlusskörpers 4 gelagert. Hierfür weist der Verschlusskörper 4 eine Steuerungsaufnahme 29 auf. Die Steuereinheit 18 ist hier in einem Bereich 30 angeordnet, welcher durch die Lagerfläche 10 und den Aufnahmeabschnitt 9 begrenzt wird. Die Steuereinheit 18 ist aussenseitig vorzugsweise mit einer Dichtschicht versehen, sodass diese problemlos mit Spülwasser in Kontakt kommen kann.

Die Steuereinheit 18 umfasst mindestens einen Sensor, insbesondere einen oder mehrere Hallsensoren 19, mit welchem die Lage des Verschlusskörpers 4 bzw. die Distanz zwischen Dichtung 5 und Ventilsitz 2 bestimmbar ist. Der Hallsensor 19 ist dabei fest am Verschlusskörper 4 angeordnet. Der Hallsensor 19 arbeitet mit dem Magnetfeld des Permanentmagneten oder mit einem Magnetfeld eines zusätzlichen in den Figuren nicht dargestellten Permanentmagneten zusammen.

Durch die Bestimmung der Lage des Verschlusskörpers 4 mit dem Hallsensor 19 kann die Spule 7 derart angesteuert werden, dass der Abstand zwischen Dichtung 5 und Ventilsitz 2 in der Spüllage konstant gehalten wird.

Bei einem Spülverfahren für die Spülvorrichtung 1 wird bei Auslösung einer Spülung der Tauchspulenaktuator 6 aktiviert, so dass der Verschlusskörper 4 von der Verschlusslage in die Spüllage bewegt wird. Nach Abfluss einer vorbestimmten Menge von Spülwasser wird der Tauchspulenaktuator 6 deaktiviert, so dass der Verschlusskörper 4 aufgrund seiner Schwerkraft von der Spüllage in die Verschlusslage bewegt wird. Alternativ kann für die Rückwärtsbewegung auch der Tauchspulenaktuator 6 derart aktiviert werden, so dass die Bewegung des Verschlusskörpers 4 von der Spüllage in die Verschlusslage durch ein Magnetfeld unterstützt wird.

Während der Spülung wird der Verschlusskörper 4 vorzugsweise in konstanter Distanz zum Ventilsitz gehalten. Das heisst, der Verschlusskörper 4 wird in einer konstanten Spüllage gehalten. Durch den absinkenden Wasserstand wirken aber andere Kräfte auf den Verschlusskörper, wodurch auch die elektrische Ansteuerung der Spule 7 sich verändert. Typischerweise wird die benötigte elektrische Leistung mit absinkendem Wasserstand kleiner. Anhand der Veränderung der elektrischen Leistung kann der Ist-Füllstand in einem Schritt der Bestimmung des Füllstandes bestimmt werden. Im Schritt der Bestimmung des Füllstandes wird - in allgemeinen Worten gesagt - der Füllstand anhand der Veränderung des elektrischen Parameters bestimmt. Dabei wird vorzugsweise die elektrische Leistung, welche für das Halten des Verschlusskörpers 4 in der Spüllage benötigt wird, gemessen. Durch die Veränderung der Leistung während der Spülung kann der Ist-Füllstand ermittelt werden. Bei absinkendem Füllstand und konstanter Öffnung zwischen Verschlusskörper 4 und Ventilsitz 2 sinkt die der Spule 7 zuzuführende elektrische Leistung, weil der Wasserdruck auf den Verschlusskörper 4 abnimmt. Erreicht der Ist-Füllstand den Wert eines Soll-Füllstandes wird der Verschlusskörper in die Verschlusslage bewegt. Der Soll-Füllstand entspricht dabei der gewählten Spülung. Bei einer Vollmengenspülung ist der Soll-Füllstand tiefer als bei einer Teilmengenspülung.

Im Schritt der Bestimmung des Füllstandes kann also über die variable elektrische Leistung der Ist-Füllstand bestimmt werden. Hierdurch werden zusätzliche Sensoren zur Füllstandmessung obsolet.

In der Figur 5 wird die Leistungsaufnahme in Relation mit dem Füllstand über die Zeit einer Spülung gezeigt. Man kann eine sehr gute Korrelation zwischen Füllstand und Leistungsaufnahme des Tauchspulenaktuators erkennen, welche bei sich absenkenden Füllstand ebenfalls sinkt.

**BEZUGSZEICHENLISTE**

| | | | |
|---|---|---|---|
| 1 | Spülvorrichtung | 18 | Steuereinheit |
| 2 | Ventilsitz | 19 | Hallsensor |
| 3 | Auslassöffnung | 20 | Überlaufrohr |
| 4 | Verschlusskörper | 21 | Gehäuse |
| 5 | Dichtung | 22 | Stege |
| 6 | Antriebselement | 23 | Haltering |
| 7 | Spule | 24 | Durchflussöffnung |
| 8 | ferromagnetisches | 25 | Lagerstelle |
| | Gegenstück | 26 | Anschlagspaarung |
| 9 | Aufnahmeabschnitt | 27 | Kämme |
| 10 | Lagerfläche | 28 | Nuten |
| 11 | Führungsfläche | 29 | Steuerungsaufnahme |
| 12 | Haltestruktur | 30 | Bereich |
| 13 | Hülsenteil | 31 | Zwischenraum |
| 14 | weiteres ferromagnetisches | 32 | Flanschelement |
| | Gegenstück | 33 | weitere Lagerfläche |
| 15 | Hülsenteil | S | Spülwasser |
| 16 | Ringspalt | M | Mittelachse |
| 17 | Permanentmagnet | | |

## Patentansprüche

1. Spülvorrichtung (1) für einen Spülkasten, umfassend
einen sich um eine Mittelachse (M) herum erstreckenden Ventilsitz (2), der in Strömungsrichtung gesehen vor einer Auslauföffnung (3) angeordnet ist,
einen Verschlusskörper (4) mit einer Dichtung (5), die mit dem Ventilsitz (2) zusammenarbeitet, wobei der Verschlusskörper (4) von einer Verschlusslage in eine Spüllage anhebbar ist, und
ein elektrisch steuerbares Antriebselement (6), welches den Verschlusskörper (4) von der Verschlusslage in die Spüllage bewegt, wobei das elektrisch steuerbare Antriebselement (6) ein Tauchspulenaktuator (6) mit einer elektrischen Spule (7) und einem ferromagnetischen Gegenstück (8) ist, wobei mit dem Tauchspulenaktuator (6) eine mechanische Kraft auf den Verschlusskörper (4) aufbringbar ist, so dass dieser von der Verschlusslage in die Spüllage bewegbar ist, **dadurch gekennzeichnet, dass** die Spule (7) am Verschlusskörper (4) angeordnet ist, und dass das Gegenstück (8) in seiner Lage bezüglich des Ventilsitzes (2) fest und beabstandet zum Ventilsitz (2) angeordnet ist.

2. Spülvorrichtung (1) nach Anspruch 1, **dadurch gekennzeichnet, dass** der Verschlusskörper (4) einen zylindrisch sich um die Mittelachse (M) herum erstreckender Aufnahmeabschnitt (9) aufweist, der beabstandet von der Dichtung (5) liegt, wobei die Spule (7) sich um diesen Aufnahmeabschnitt (9) herum erstreckt und am Aufnahmeabschnitt (9) gelagert ist.

3. Spülvorrichtung (1) nach einem der vorhergehenden Ansprüche, **dadurch gekennzeichnet, dass** der Verschlusskörper (4) eine Lagerfläche (10) aufweist, und dass eine Führungsfläche (11) in ihrer Lage fest und beabstandet zum Ventilsitz (2) angeordnet ist, wobei der Verschlusskörper (4) über seine Lagerfläche (10) an der Führungsfläche (11) bewegbar gelagert ist.

4. Spülvorrichtung (1) nach einem der vorhergehenden Ansprüche, **dadurch gekennzeichnet, dass** sich dem Ventilsitz (2) eine Haltestruktur (12) anschliesst, an welcher das ferromagnetische Gegenstück (8) fest gelagert ist.

5. Spülvorrichtung (1) nach Anspruch 3 und 4, **dadurch gekennzeichnet, dass** die Haltestruktur (12) die Führungsfläche (11) bereitstellt.

6. Spülvorrichtung (1) nach einem der vorhergehenden Ansprüche, **dadurch gekennzeichnet, dass** das ferromagnetische Gegenstück (8) als Hülsenteil (13) ausgebildet ist, welches sich zylindrisch, insbesondere kreiszylindrisch, um die Mittelachse (M) herum erstreckt.

7. Spülvorrichtung (1) nach Anspruch 6, **dadurch gekennzeichnet, dass** ein weiteres ferromagnetisches Gegenstück (14) vorhanden ist, welches als zylindrisch, insbesondere kreiszylindrisch, um die Mittelachse (M) herum erstreckendes Hülsenteil (15) ausgebildet ist, wobei das weitere Hülsenteil (15) einen kleineren Durchmesser als das besagte Hülsenteil (13) aufweist und konzentrisch zum besagten Hülsenteil (13) angeordnet ist, wobei die beiden Hülsenteile (13, 15) einen Spalt, insbesondere einen Ringspalt (16), definieren, in welchem die Spule (7) bewegbar ist.

8. Spülvorrichtung (1) nach Anspruch 3 und 6 oder nach Anspruch 3 und 7, **dadurch gekennzeichnet, dass** die Führungsfläche (11) durch das Hülsenteil (14) und/oder das weitere Hülsenteil (15) bereitgestellt wird.

9. Spülvorrichtung (1) nach einem der vorhergehenden Ansprüche, **dadurch gekennzeichnet, dass** ein Permanentmagnet (17), welcher mit der Spule (7) und dem ferromagnetischen Gegenstück (8, 14) zusammenarbeitet, in seiner Lage ortsfest zum ferromagnetischen Gegenstück (8, 14), insbesondere in Kontakt mit demselben bzw. denselben, angeordnet ist.

10. Spülvorrichtung (1) nach einem der vorhergehenden Ansprüche, **dadurch gekennzeichnet, dass** eine Steuereinheit (18) zur Ansteuerung der Spule (7) am oder im Verschlusskörper (4) fest angeordnet ist.

11. Spülvorrichtung (1) nach Anspruch 10, **dadurch gekennzeichnet, dass** die Steuereinheit (18) einen Sensor, insbesondere einen Hallsensor (19), umfasst, mit welchem die Lage des Verschlusskörpers (4) bzw. die Distanz zwischen Dichtung (5) und Ventilsitz (2) bestimmbar ist, wobei der Hallsensor (19) mit dem Magnetfeld des Permanentmagneten (17) zusammenarbeitet oder wobei der Hallsensor mit dem Magnetfeld eines zusätzlichen Permanentmagneten zusammenarbeitet.

12. Spülvorrichtung (1) nach einem der Ansprüche 8 bis 11, **dadurch gekennzeichnet, dass** die Steuereinheit (18) oberhalb der Dichtung (5) am bzw. im Verschlusskörper (4) gelagert ist.

13. Spülverfahren für eine Spülvorrichtung (1) nach einem der vorhergehenden Ansprüche, **dadurch gekennzeichnet, dass** bei Auslösung einer Spülung der Tauchspulenaktuator (6) aktiviert wird, so dass der Verschlusskörper (4) von der Verschlusslage in die Spüllage bewegt wird, und
dass nach Abfluss einer vorbestimmten Menge von Spülwasser der Tauchspulenaktuator (6) deaktiviert wird, so dass der Verschlusskörper (4) aufgrund seiner Schwerkraft von der Spüllage in die Verschlusslage bewegt wird;
oder
dass nach Abfluss einer vorbestimmten Menge von Spülwasser der Tauchspulenaktuator (6) derart aktiviert wird, so dass der Verschlusskörper (4) von der Spüllage in die Verschlusslage bewegt wird;
wobei die Spule (7) am Verschlusskörper (4) angeordnet ist, und dass das Gegenstück (8) in seiner Lage bezüglich des Ventilsitzes (2) fest und beabstandet zum Ventilsitz (2) angeordnet ist.

14. Spülverfahren nach Anspruch 13, **dadurch gekennzeichnet, dass**, wenn sich der Verschlusskörper (4) in Spüllage befindet, durch die Steuereinheit (18) die Veränderung mindestens eines der Spule (7) zugeführten elektrischen Parameters gemessen wird, wobei in einem Schritt der Bestimmung des Ist-Füllstandes der Füllstand anhand der Veränderung des elektrischen Parameters bestimmbar ist und wobei wenn der Ist-Füllstand den Wert eines Soll-Füllstandes erreicht, der Verschlusskörper (4) in die Verschlusslage bewegt wird.

15. Spülverfahren nach Anspruch 13, **dadurch gekennzeichnet, dass** in der Spüllage der Verschlusskörper (4) in festem oder variablen Abstand zum Ventilsitz (2) gehalten wird, wobei die Veränderung des elektrischen Parameters bei sich in der Spüllage befindlichen Verschlusskörper (4) gemessen wird.

## Claims

1. Flushing device (1) for a flushing cistern, comprising
a valve seat (2) which extends about a central axis (M) and, when viewed in the flow direction, is arranged upstream of an outflow opening (3),
a closure body (4) having a seal (5) which interacts with the valve seat (2), wherein the closure body (4) is liftable from a closure position into a flushing position, and
an electrically controllable drive element (6) which moves the closure body (4) from the closure position into the flushing position, wherein the electrically controllable drive element (6) is a plunger coil actuator (6) having an electrical coil (7) and having a ferromagnetic counterpart (8), wherein, by way of the plunger coil actuator (6), a mechanical force is able to be applied to the closure body (4) such that the latter is movable from the closure position into the flushing position, **characterized in that** the coil (7) is arranged on the closure body (4), and **in that** the counterpart (8) is arranged fixedly in its position with respect to the valve seat (2) and spaced apart from the valve seat (2).

2. Flushing device (1) according to Claim 1, **characterized in that** the closure body (4) comprises a receiving portion (9) which extends in a cylindrical manner about the central axis (M) and which is situated spaced apart from the seal (5), wherein the coil (7) extends around said receiving portion (9) and is mounted on the receiving portion (9).

3. Flushing device (1) according to one of the preceding claims, **characterized in that** the closure body (4) comprises a bearing surface (10), and **in that** a guide surface (11) is arranged fixedly in its position and spaced apart from the valve seat (2), wherein the closure body (4) is movably mounted on the guide surface (11) via its bearing surface (10).

4. Flushing device (1) according to one of the preceding claims, **characterized in that** the valve seat (2) is adjoined by a holding structure (12) on which the ferromagnetic counterpart (8) is fixedly mounted.

5. Flushing device (1) according to Claim 3 or 4, **characterized in that** the holding structure (12) provides the guide surface (11).

6. Flushing device (1) according to one of the preceding claims, **characterized in that** the ferromagnetic counterpart (8) is designed as a sleeve part (13) which extends in a cylindrical manner, in particular in a circular-cylindrical manner, about the central axis (M).

7. Flushing device (1) according to Claim 6, **characterized in that** a further ferromagnetic counterpart (14) is present which is designed as a sleeve part (15) which extends in a cylindrical manner, in particular in a circular-cylindrical manner, about the central axis (M), wherein the further sleeve part (15) has a smaller diameter than said sleeve part (13) and is arranged in a concentric manner with respect to said sleeve part (13), wherein the two sleeve parts (13, 15) define a gap, in particular an annular gap (16) in which the coil (7) is movable.

8. Flushing device (1) according to Claim 3 and 6 or according to Claim 3 and 7, **characterized in that** the guide surface (11) is provided by the sleeve part (14) and/or the further sleeve part (15).

9. Flushing device (1) according to one of the preceding claims, **characterized in that** a permanent magnet (17) which interacts with the coil (7) and with the ferromagnetic counterpart (8, 14) is arranged positionally fixed in its position with respect to the ferromagnetic counterpart (8, 14), in particular in contact with said ferromagnetic counterpart(s).

10. Flushing device (1) according to one of the preceding claims, **characterized in that** a control unit (18) for activation of the coil (7) is arranged fixedly on or in the closure body (4).

11. Flushing device (1) according to Claim 10, **characterized in that** the control unit (18) comprises a sensor, in particular a Hall sensor (19), by way of which the position of the closure body (4) or the distance between the seal (5) and the valve seat (2) is able to be determined, wherein the Hall sensor (19) interacts with the magnetic field of the permanent magnet (17), or wherein the Hall sensor interacts with the magnetic field of an additional permanent magnet.

12. Flushing device (1) according to one of Claims 8 to 11, **characterized in that** the control unit (18) is arranged above the seal (5) on or in the closure body (4), respectively.

13. Flushing method for a flushing device (1) according to one of the preceding claims, **characterized in that**, when a flushing operation is triggered, the plunger coil actuator (6) is activated such that the closure body (4) is moved from the closure position into the flushing position, and
**in that**, after a predetermined quantity of flushing water has flown out, the plunger coil actuator (6) is deactivated such that the closure body (4) is moved from the flushing position into the closure position on account of its gravitational force;
or
**in that**, after a predetermined quantity of flushing water has flown out, the plunger coil actuator (6) is activated such that the closure body (4) is moved from the flushing position into the closure position; wherein the coil (7) is arranged on the closure body (4), and **in that** the counterpart (8) is arranged fixedly in its position with respect to the valve seat (2) and spaced apart from the valve seat (2).

14. Flushing method according to Claim 13, **characterized in that**, when the closure body (4) is in the flushing position, the change in at least one electrical parameter supplied to the coil (7) is measured by the control unit (18), wherein, in a step of determining the actual fill level, the fill level is able to be determined on the basis of the change in the electrical parameter, and wherein, when the actual fill level reaches the value of a target fill level, the closure body (4) is moved into the closure position.

15. Flushing method according to Claim 13, **characterized in that**, in the flushing position, the closure body (4) is held at a fixed or variable distance from the valve seat (2), wherein the change in the electrical parameter is measured when the closure body (4) is in the flushing position.

## Revendications

1. Dispositif de rinçage (1) pour une chasse d'eau, comprenant
un siège de soupape (2) s'étendant autour d'un axe médian (M), qui est disposé, vu dans la direction d'écoulement, devant une ouverture de sortie (3), un corps de fermeture (4) avec un joint d'étanchéité (5) qui coopère avec le siège de soupape (2), le corps de fermeture (4) pouvant être soulevé d'une position de fermeture dans une position de rinçage,
et
un élément d'entraînement à commande électrique (6), qui déplace le corps de fermeture (4) de la position de fermeture dans la position de rinçage, l'élément d'entraînement à commande électrique (6) étant un actionneur à bobine plongeante (6) avec une bobine électrique (7) et une pièce conjuguée ferromagnétique (8), une force mécanique pouvant être appliquée par l'actionneur à bobine plongeante (6) sur le corps de fermeture (4), de telle sorte que celui-ci puisse être déplacé de la position de fermeture dans la position de rinçage, **caractérisé en ce que** la bobine (7) est disposée au niveau du corps de fermeture (4), et **en ce que** la pièce conjuguée (8) est disposée fixement en position par rapport au siège de soupape (2) et à distance du siège de soupape (2).

2. Dispositif de rinçage (1) selon la revendication 1, **caractérisé en ce que** le corps de fermeture (4) présente une portion de réception (9) s'étendant sous forme cylindrique autour de l'axe médian (M), qui est située à distance du joint d'étanchéité (5), la bobine (7) s'étendant autour de cette portion de réception (9) et étant supportée sur la portion de réception (9).

3. Dispositif de rinçage (1) selon l'une quelconque des revendications précédentes, **caractérisé en ce que** le corps de fermeture (4) présente une surface de palier (10), et **en ce qu'**une surface de guidage (11) est disposée fixement en position et à distance par rapport au siège de soupape (2), le corps de fermeture (4) étant supporté de manière déplaçable par le biais de sa surface de palier (10) au niveau de la surface de guidage (11).

4. Dispositif de rinçage (1) selon l'une quelconque des revendications précédentes, **caractérisé en ce qu'**une structure de retenue (12) se raccorde au siège de soupape (2), au niveau de laquelle est supportée fixement la pièce conjuguée ferromagnétique (8).

5. Dispositif de rinçage (1) selon les revendications 3 et 4, **caractérisé en ce que** la structure de retenue (12) fournit la surface de guidage (11).

6. Dispositif de rinçage (1) selon l'une quelconque des revendications précédentes, **caractérisé en ce que** la pièce conjuguée ferromagnétique (8) est réalisée sous forme de partie de douille (13) qui s'étend sous forme cylindrique, en particulier cylindrique circulaire, autour de l'axe médian (M).

7. Dispositif de rinçage (1) selon la revendication 6, **caractérisé en ce qu'**une pièce conjuguée ferromagnétique supplémentaire (14) est prévue, laquelle est réalisée sous forme de partie de douille (15) s'étendant sous forme cylindrique, en particulier cylindrique circulaire, autour de l'axe médian (M), la partie de douille supplémentaire (15) présentant un plus petit diamètre que ladite partie de douille (13) et étant disposée concentriquement par rapport à ladite partie de douille (13), les deux parties de douille (13, 15) définissant une fente, en particulier une fente annulaire (16), dans laquelle peut être déplacée la bobine (7).

8. Dispositif de rinçage (1) selon les revendications 3 et 6 ou selon les revendications 3 et 7, **caractérisé en ce que** la surface de guidage (11) est fournie par la partie de douille (14) et/ou la partie de douille supplémentaire (15).

9. Dispositif de rinçage (1) selon l'une quelconque des revendications précédentes, **caractérisé en ce qu'**un aimant permanent (17) qui coopère avec la bobine (7) et la pièce conjuguée ferromagnétique (8, 14), est disposé fixement en position par rapport à la pièce conjuguée ferromagnétique (8, 14), en particulier en contact avec celle-ci ou celles-ci.

10. Dispositif de rinçage (1) selon l'une quelconque des revendications précédentes, **caractérisé en ce qu'**une unité de commande (18) est disposée fixement au niveau du ou dans le corps de fermeture (4) pour commander la bobine (7).

11. Dispositif de rinçage (1) selon la revendication 10, **caractérisé en ce que** l'unité de commande (18) comprend un capteur, en particulier un capteur de Hall (19), avec lequel la position du corps de fermeture (4) ou la distance entre le joint d'étanchéité (5) et le siège de soupape (2) peuvent être déterminées, le capteur de Hall (19) coopérant avec le champ magnétique de l'aimant permanent (17) ou le capteur de Hall coopérant avec le champ magnétique d'un aimant permanent supplémentaire.

12. Dispositif de rinçage (1) selon l'une quelconque des revendications 8 à 11, **caractérisé en ce que** l'unité de commande (18) est supportée au-dessus du joint d'étanchéité (5) sur ou dans le corps de fermeture (4) .

13. Procédé de rinçage pour un dispositif de rinçage (1) selon l'une quelconque des revendications précédentes, **caractérisé en ce que** lors du déclenchement d'un rinçage, l'actionneur à bobine plongeante (6) est activé de telle sorte que le corps de fermeture (4) soit déplacé de la position de fermeture dans la position de rinçage, et
**en ce qu'**après l'écoulement d'une quantité prédéterminée d'eau de rinçage, l'actionneur à bobine plongeante (6) est désactivé de telle sorte que le corps de fermeture (4) sous l'effet de sa force de pesanteur, soit déplacé de la position de rinçage dans la position de fermeture ;
ou
**en ce qu'**après l'écoulement d'une quantité prédéterminée d'eau de rinçage, l'actionneur à bobine plongeante (6) est activé de telle sorte que le corps de fermeture (4) soit déplacé de la position de rinçage dans la position de fermeture ; la bobine (7) étant disposée au niveau du corps de fermeture (4), et **en ce que** la pièce conjuguée (8) est fixée en position par rapport au siège de soupape (2) et est espacée du siège de soupape (2).

14. Procédé de rinçage selon la revendication 13, **caractérisé en ce que** lorsque le corps de fermeture (4) se trouve dans la position de rinçage, l'unité de commande (18) mesure la variation d'au moins un paramètre électrique acheminé à la bobine (7), dans une étape de détermination du niveau de remplissage instantané, le niveau de remplissage pouvant être déterminé à l'aide de la variation du paramètre électrique, et lorsque le niveau de remplissage actuel atteint la valeur d'un niveau de remplissage de consigne, le corps de fermeture (4) étant déplacé dans la position de fermeture.

15. Procédé de rinçage selon la revendication 13, **caractérisé en ce que** dans la position de rinçage, le corps de fermeture (4) est maintenu à distance fixe ou variable du siège de soupape (2), la variation du paramètre électrique étant mesurée lorsque le corps de fermeture (4) se trouve dans la position de rinçage.
